# EUROPÄISCHE PATENTSCHRIFT

(11) **EP 1 368 437 B1**
(45) Veröffentlichungstag und Bekanntmachung des Hinweises auf die Patenterteilung: **25.10.2006**
(21) Anmeldenummer: 02700225.2
(22) Anmeldetag: 12.02.2002
(51) Int. Cl.: C09D 4/00, C09D 4/06, C08F 4/00

(54) **BESCHICHTUNGSMITTELZUSAMMENSETZUNGEN**
COATING COMPOSITIONS
COMPOSITIONS DE REVETEMENT

(30) Priorität: 13.02.2001 DE 10106543
(43) Veröffentlichungstag der Anmeldung: 10.12.2003
(73) Patentinhaber: BASF Aktiengesellschaft, 67056 Ludwigshafen (DE)
(72) Erfinder: SCHWALM, Reinhold, 67157 Wachenheim (DE); RAETHER, Roman, Benedikt, 67117 Limburgerhof (DE)
(74) Vertreter: Isenbruck, Günter
(86) Internationale Anmeldenummer: PCT/EP2002/001441
(87) Internationale Veröffentlichungsnummer: WO 2002/064685

(56) Entgegenhaltungen:
- WO-A-00/39169
- WO-A-99/00426
- DE-A- 10 008 367
- US-A- 5 468 789

## Beschreibung

Die Erfindung betrifft Beschichtungsmittelzusammensetzungen und Verfahren zu deren Herstellung sowie deren erfindungsgemäße Verwendung.

Gebrauchsfertige Beschichtungsmittelzusammensetzungen, das heißt Abmischungen der zu härtenden Polymere mit radikalischen Initiatoren und gegebenenfalls weitere Additive, leiden häufig unter dem Nachteil, daß sie nicht lagerstabil sind, sondern vor dem eigentlichen Gebrauch durchhärten, da gängige thermische Initiatoren bereits unterhalb der Zerfallstemperatur zu einem kleinen Prozentsatz in Radikale zerfallen. Um dies zu verhindern, müssen die Abmischungen gekühlt werden, was den Transport erschwert und die Lagerung verteuert. Die getrennte Auslieferung von Beschichtungsmittel und Initiator ist ebenfalls unpraktisch, da der Kunde aus Raum-, Zeit- und Kostengründen eine sofort verwendbare Mischung vorzieht.

Bei Beschichtungen zweidimensionaler Flächen kann das Problem dadurch umgangen werden, daß UV-Initiatoren verwendet werden. Beispiele hierfür sind in der DE-A 16 94 253, US 5,369,140 und US 4,833,038 offenbart. Bei einer strahlungshärtbaren Beschichtung wie beispielsweise der UV-Lackierung von komplex gestalteten dreidimensionalen Oberflächen, die zum Beispiel in der DE-A 197 54 633 beschrieben wird, muß die Belichtung gleichmäßig erfolgen, um zu vermeiden, daß an kritischen Stellen wie beispielsweise an Kanten oder auf innenliegenden Flächen ungehärtete Bereiche zurückbleiben. Zurückbleibende ungehärtete Bereiche können mitunter zu Verklebungen, zu Emission niedermolekularer Verbindungen, teilweise verbunden mit einer Geruchsbelästigung oder einer Gesundheitsgefährdung, sowie zu mangelhaftem Glanz und mangelhafter Schutzwirkung des Lacks führen. Dies macht oftmals ein teures Nacharbeiten erforderlich, wenn nicht gar die mit hohen Kosten verbundene Entsorgung wertvoller Substrate.

Daher werden entweder thermische Initiatoren oder Gemische von thermischen und UV-Initiatoren ("dual cure") verwendet. Die gängigen Dual-cure-Systeme nutzen Polyadditions oder Kondensationsreaktionen als thermische Härtung aus (siehe zum Beispiel Polymers Paint Colour J., Vol. 179, No. 4237, 1989). Diese Reaktionen sind jedoch in der Härtungsgeschwindigkeit recht langsam.

Die WO 98/00456 beschreibt einen Dual-cure-Härtungsprozeß unter Verwendung einer Mischung enthaltend (a) ein Beschichtungsmittel aus einem Polyacrylatpolyol oder Polyesterpolyol mit Melamin, oder einem Polyacrylatpolyol und/oder einem Polyesterpolyol mit einem Polyisocyanat, oder einem Polyester und/oder einem Polyacrylat mit einem epoxy-funktionalisiertem Polyester und/oder Polyacrylat, (b) einem OH-, NH₂-, epoxy- oder NCO funktionalisiertem Harz mit mindestens einer ethylenisch ungesättigten Doppelbindung und (c) einem Photoinitiator.

WO 00/39169 betrifft Beschichtungsmittel enthaltend ein Umsetzungsprodukt (A), das durch radikalische Reaktion eines radikalisch umsetzbaren Monomeren (a) in Gegenwart von Diphenylethen oder dessen Derivaten in wässriger Phase herstellbar ist, und einen Zusatzstoff (C). Daneben kann das Beschichtungsmittel zusätzlich ein weiteres Polymer (B) enthalten.

WO 99/00426 betrifft ein Verfahren zur radikalisch initiierten wässrigen Emulsionspolymerisation in Anwesenheit eines stabilen N-Oxyl-Radikals. Es wird ein Gemisch offenbart, das eine wenigstens eine ethylenisch ungesättigte Gruppe aufweisende Verbindung und wenigstens eine Verbindung, die unter Einwirkung von Wärme in ein stabiles N-Oxyl-Radikal und einen die Polymerisation iniitierenden radikalischen Partner zerfällt.

DE-A 100 08 367 betrifft am N-Atom mit einer Einheit -O-E-OH substituierte, gehinderte Amine, die beim Stabilisieren von Polyolefin und Kraftfahrzeugbeschichtungsmittelzusammensetzungen gegen die verschlechternden, durch Oxidation, Wärme und aktinische Strahlung bedingten Einflüsse besonders wirksam sind, wobei die Gegenwart der OH-Gruppe den Verbindungen bedeutende Eigenschaften verleiht, die durch die Verwendung von normalen Einheiten -O-E nicht erreichbar sind. Des Weiteren betrifft DE-A 100 08 367 eine Zusammensetzung, umfassend ein organisches Polymer oder Aufzeichnungsmaterial, das den nachteiligen Wirkungen von Wärme, Sauerstoff und Licht unterliegt, und eine wirksam stabilisierende Menge einer oder mehrerer Verbindungen, die am N-Atom mit einer Einheit -O-E-OH substituiert sind, enthält.

Die Mitverwendung thermischer Initiatoren oder Photoinitiatoren bringt aber das oben beschriebene Problem mit sich. In der Technik ist keine befriedigende Lösung dieses Problems beschrieben.

Aufgabe der vorliegenden Erfindung ist es daher, Beschichtungsmittel und Verfahren zu deren Herstellung bereitzustellen, mit deren Hilfe gebrauchsfertige lagerstabile Beschichtungsmittel erhalten werden, die bis zu hohen Temperaturen stabil sind und trotzdem ein gleichmäßiges Härten einer Beschichtung gewährleisten.

Diese Aufgabe wird erfindungsgemäß gelöst durch eine Beschichtungsmittelzusammensetzung, die stabile Addukte enthält, die bei höheren Temperaturen initiierend wirkende Radikale erzeugen, und Verfahren zu deren Herstellung.

Der Gegenstand der Erfindung ist eine Beschichtungsmittelzusammensetzung umfassend mindestens eine Verbindung der allgemeinen Formel (I): 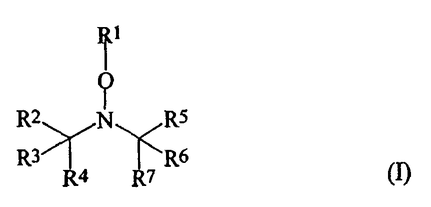 in der
- R¹ einen Rest mit mindestens einem Kohlenstoffatom repräsentiert und das zu R¹ korrespondierende freie Radikal R¹• eine radikalische Polymerisation ungesättigter Monomere initiieren kann,
- die Reste R², R³, R⁴, R⁵, R⁶, R⁷ für gleiche oder verschiedene gerad- oder verzweigtkettige, substituierte oder unsubstituierte Alkylgruppen, substituierte oder unsubstituierte Aralkyl-, Alkylaryl- oder Arylgruppen stehen, wobei -CR²R³ und/oder -CR⁶R⁷ Teil einer cyclischen Struktur sein können,
- die Reste R⁴ und R⁵ für Cyano-, Ether-, Hydroxy-, Nitro- oder Carbonylhaltige Gruppen stehen oder R⁴CNCR⁵ ein Teil einer substituierten oder unsubstituierten cyclischen Struktur, an die mindestens ein weiterer gesättigter oder ungesättigter Ring ankondensiert sein kann, ist oder
- -CR²R³R⁴ oder -CR⁵R⁶R⁷ Teil eines aromatischen Rings sind;
oder mindestens eine Verbindung der allgemeinen Formel (Ia): 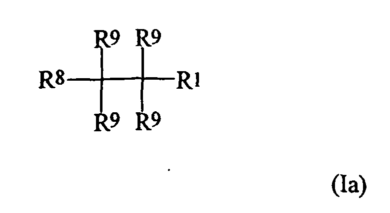 in der
- R¹ einen Rest mit mindestens einem Kohlenstoffatom repräsentiert und das zu R¹ korrespondierende freie Radikal R¹• eine radikalische Polymerisation ungesättigter Monomere initiieren kann,
- R⁸ und R⁹ für Wasserstoff, gleiche oder verschiedene gerad- oder verzweigtkettige, substituierte oder unsubstituierte Alkylgruppen, substituierte oder unsubstituierte Aralkyl-, Alkylaryl- oder Arylgruppen stehen, die einen polymeren Charakter besitzen können,
- mindestens zwei der Reste R⁹ ein Phenylrest oder ein substituierten Phenylrest sind;
oder ein Gemisch aus zwei oder mehr davon.

Ein "Gemisch aus zwei oder mehr davon" bedeutet im Rahmen der vorliegenden Erfindung, daß es sich um ein Gemisch handelt, enthaltend mindestens eine Verbindung der allgemeinen Formel (I) und mindestens eine Verbindung der allgemeinen Formel (Ia) oder um ein Gemisch aus zwei oder mehr Verbindungen der allgemeinen Formel (I) oder um ein Gemisch aus zwei oder mehr Verbindungen der allgemeinen Formel (Ia).

Diese Bindemittelzusammensetzungen sind entweder rein thermisch radikalisch härtbar oder durch kombinierte thermisch radikalische und UV-radikalische Polymerisation. Bevorzugt ist die kombinierte Härtung.

Unter einem stabilen Addukt wird im Rahmen der vorliegenden Erfindung ein Addukt verstanden, das an der Luft und/oder bei Raumtemperatur und/oder normaler Luftfeuchtigkeit und/oder Licht über einen längeren Zeitraum stabil ist und in der Regel oberhalb 80°C, bevorzugt oberhalb 100°C unter homolytischer Bindungsspaltung in initiierende, nicht peroxidische Radikale zerfällt.

Unter einem initiierend wirkenden Radikal wird im Rahmen der vorliegenden Erfindung ein Radikal verstanden, das, wenn es einmal erzeugt ist, Monomere in einer Kettenreaktion zu Polymeren umsetzt.

Es ist im Rahmen der Erfindung möglich, einen Polymerisationsprozeß durch Wahl einer geeigneten Verbindung der Formel (I) mit Resten R¹ bis R⁷ oder einer Verbindung der Formel (Ia) mit den Resten R¹, R⁸ und R⁹ gezielt zu kontrollieren.

Der Rest R¹ der Verbindung der allgemeinen Formel (I) kann ein oder mehr ONC(R²⁻⁴)C(R⁵⁻⁷) Gruppen aufweisen, sofern jedes Radikal R¹•, das bei einer Spaltung der R¹-O-Bindung entsteht, eine freie radikalische Polymerisation ungesättigter Monomere initiieren kann.

Beim thermischen Zerfall einer Verbindung der allgemeinen Formel (Ia) entsteht neben dem Radikal R¹• ein weiteres Kohlenstoffradikal. Beide Radikale wirken initiierend.

Der Rest R¹ kann einen polymeren Charakter besitzen. Es ist jedoch bevorzugt, daß der Rest R¹ nicht mehr als etwa 10 insbesondere nicht mehr als 4 Wiederholungseinheiten aufweist. Geeignete Gruppen für R¹ sind Phenyl-, Methyl-, tert. Butyl-, Cyanoisopropyl- oder ähnliche Gruppen. In einer möglichen Ausführungsform der vorliegenden Erfindung besitzt R¹• eine allgemeine Struktur der Formel (II): 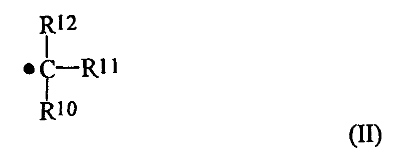 wobei R¹⁰, R¹¹ und R¹² gleich oder unterschiedliche Gruppen ausgewählt aus Wasserstoff, Alkyl, Phenyl, Cyano, Carboxyl oder cyclischen Gruppen oder substituierte Gruppen davon sind. Die Gruppen R¹⁰, R¹¹ und R¹² können auch einen polymeren Charakter besitzen.

Bevorzugt sind dabei zwei der Reste R¹⁰, R¹¹ und R¹² Alkylreste, insbesondere Methylreste, der dritte Rest eine Cyanogruppe. In einer weiteren Ausführungsform kann einer der Reste R¹⁰, R¹¹ und R¹² aus mehreren Wiederholungseinheiten aufgebaut sein. Insbesondere bevorzugt ist eine Struktur der allgemeinen Formel (IIa): 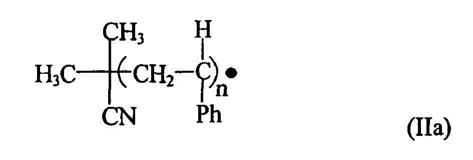 wobei n eine ganze Zahl von 0 bis 10 sein kann.

Die Verbindung der Formel (I) enthält als stabile Radikale stabile N-Oxyl-Radikale der allgemeinen Formel (III), die sich von einem sekundären Amin ableiten: 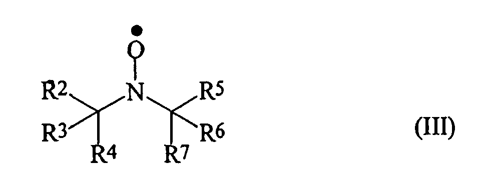 darin bedeuten R², R³, R⁴, R⁵, R⁶ und R⁷ gleiche oder verschiedene gerad- oder verzweigtkettige, substituierte oder unsubstituierte Alkylgruppen, substituierte oder unsubstituierte Aralkyl-, Alkylaryl- oder Arylgruppen, wobei -CR²R³ oder -CR⁶R⁷ Teil einer cyclischen Struktur sein können. Die Reste R⁴ und R⁵ können auch für Cyano-, Ether-, Hydroxy-, Nitro- oder Carbonylhaltige Gruppen stehen oder R⁴CNCR⁵ kann ein Teil einer substituierten oder unsubstituierten cyclischen Struktur sein, an die mindestens ein weiterer gesättigter oder ungesättigter Ring ankondensiert sein kann. Es kann ebenfalls -CR²R³R⁴ oder -CR⁵R⁶R⁷ Teil eines aromatischen Rings sein.

Beipiele dafür sind stabile N-Oxyl-Radikale der allgemeinen Formel (III), bei welchen R², R³, R⁴, R⁵, R⁶ und R⁷ für gleiche oder verschiedene Methyl-, Ethyl-, n-Propyl-, iso-Propyl-, n-Butyl-, iso-Butyl-, tert.-Butyl-, lineares oder verzweigtes Pentyl-, Phenyl-, oder substituierte Gruppen hiervon oder R⁴ und R⁵ - sofern R⁴CNCR⁵ einen Teil einer cyclischen Struktur bildet - für die cyclische Struktur 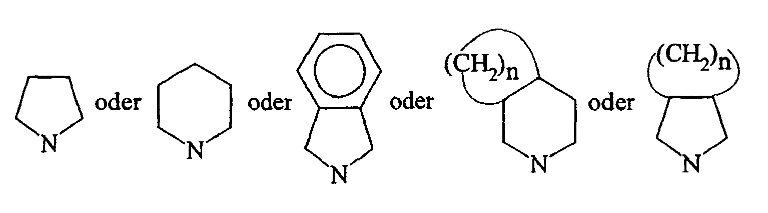 in der n = eine ganze Zahl von 1 bis 10, vorzugsweise 1 bis 6, einschließlich substituierter derartiger cyclischer Gruppen, stehen. Als beispielhafte Vertreter seien 2,2,6,6-Tetramethyl-1-oxyl-piperidin, 2,2,5,5-Tetramethyl-1-oxyl-pyrrolidin und 4-Oxo-2,2,6,6-tetramethyl-1-oxyl-piperidin genannt.

Die stabilen N-Oxyl-Radikale lassen sich aus den entsprechenden sekundären Aminen durch Oxidation, z.B. mit Wasserstoffperoxid, herstellen. In der Regel sind sie als Reinsubstanz darstellbar.

Weitere in dem erfindungsgemäßen Verfahren geeignete stabile N-Oxyl-Radikale sind in der DE-A-19 803 098 beschrieben.

Besonders bevorzugt werden die stabilen N-Oxyl-Radikale 2,2,6,6-Tetramethyl-1-piperidinyloxy (TEMPO), 4-Hydroxy-2,2,6,6-tetramethyl-1-piperidinyloxy (HO-TEMPO)oder di-tert.-Butyl-nitroxid (DTBN) eingesetzt.

Die Verbindungen der allgemeinen Formel (I) können nach bekannten Methoden der organischen Chemie hergestellt werden, wie sie beispielsweise in der WO 98/13392 erwähnt sind.

Bevorzugt wird ein Initiator-Addukt der Formel (I) 1-Phenyl-1-(2',2',6',6'-tetramethyl-1'-piperidinyloxy)-ethan eingesetzt.

Der Zerfall der Verbindung der allgemeinen Formel (I) erfolgt generell zwischen 80 und 180°C, bevorzugt zwischen 95 bis 160°C, besonders bevorzugt zwischen 100 und 140°C. Es ist bekannt, daß elektronenschiebende Gruppen die R-O-Bindung stabilisieren, wohingegen elektronenziehende Substituenten diese Bindung schwächen. Somit können geeignete Substituenten nahezu beliebig ausgewählt und kombiniert werden, um die Zerfallstemperatur den Erfordernissen in einem weiten Bereich anzupassen, solange die Verbindung der Formel (I) die erfindungsgemäß erforderliche Stabilität aufweist.

Das beim Zerfall der Addukte der Formel (I) entstehende stabile Radikal kann die Geschwindigkeit der Polymerisation unerwünscht verlangsamen, da mit den Radikalen am Ende der wachsenden Polymere wiederum Addukte gebildet werden können, die unterhalb einer kritischen Temperatur stabil sind. Es ist daher möglich, daß die Beschichtungsmittelzusammensetzung organische Säuren enthält, da diese das entstehende stabile Radikal zerstören. Das initiierend wirkende Radikal wird von organischen Säuren jedoch nicht angegriffen. Bevorzugt wird als organische Säure p-Toluolsulfonsäure verwendet.

Der Zerfall der Verbindung der allgemeinen Formel (Ia) erfolgt generell zwischen 80 und 180°C, bevorzugt zwischen 95 bis 160°C, besonders bevorzugt zwischen 100 und 140°C. Es ist bekannt, daß die C-R¹-Bindung durch sterisch anspruchsvolle Substituenten R⁹ geschwächt wird. Somit können geeignete Substituenten nahezu beliebig ausgewählt und kombiniert werden, um die Zerfallstemperatur den Erfordernissen in einem weiten Bereich anzupassen, solange die Verbindung der Formel (Ia) die erfindungsgemäß erforderliche Stabilität aufweist. Beim Zerfall der Verbindung der Formel (Ia) entstehen zwei initiierend wirkende Radikale.

Bevorzugt handelt es sich bei der Verbindung der allgemeinen Formel (Ia) um eine Verbindung mit einem polymeren Charakter, insbesondere um eine Oligomer, das substituierte Ethan-Einheiten aufweist.

In einer besonders bevorzugten Ausführungsform ist die Verbindung der allgemeinen Formel (Ia) ein Polymer mit Diphenylethan-Einheiten.

Verbindungen der allgemeinen Formel (Ia) lassen sich beispielsweise durch radikalische oder anionische Polymerisationsverfahren herstellen. Geeignete Verfahren sind beispielsweise in der DE-A 199 10 339, der DE-A 198 05 586 oder der WO 00/39169 beschrieben.

Als weitere Komponenten der erfindungsgemäßen Bindemittelzusammensetzung können im Prinzip alle auf diesem Gebiet verwendbaren und dem Fachmann bekannten Komponenten verwendet werden.

Im folgenden sind einige Beispiele genannt:

Die Beschichtungsmittelzusammensetzung kann ein oder mehrere ethylenisch ungesättigte Monomere enthalten, die radikalisch polymerisierbar sind, also in Gegenwart der initiierend wirkenden Radikale polymerisieren.

Als wenigstens eine ethlyenisch ungesättigte Gruppe aufweisende Monomere kommen z.B. in Betracht: Olefine wie Ethlylen oder Propylen, vinylaromatische Monomere wie Styrol, Divinylbenzol, 2-Vinylnaphthalin und 9-Vinylanthracen, substituierte vinylaromatische Monomere wie p-Methylstyrol, α-Methylstyrol, o-Chlorstyrol, p-Chlorstyrol, 2,4-Dimethylstyrol, 4-Vinylbiphenyl und Vinyltoluol, Ester aus Vinylalkohol und 1 bis 18 C-Atome aufweisenden Monocarbonsäuren wie Vinylacetat, Vinylpropionat, Vinyl-n-butyrat, Vinyllaurat und Vinylstearat, Ester aus 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 20, bevorzugt 1 bis 12, besonders bevorzugt 1 bis 8 und ganz besonders bevorzugt 1 bis 4 C-Atome aufweisenden Alkanolen wie insbesondere Acrylsäure- und Methacrylsäure-, -methyl-, -ethyl-, -n-butyl-, -iso-butyl-, -tert.-butyl- und -2-ethylhexylester, Maleinsäuredimethylester oder Maleinsäure-n-butylester, die Nitrile der vorgenannten α,β-monoethylenisch ungesättigten Carbonsäuren wie Acrylnitril und Methacrylnitril sowie C₄₋₈-konjugierte Diene wie 1,3-Butadien und Isopren, sowie Acrylsäure und Methacrylsäure.

Als Styrolverbindungen kommen solche der allgemeinen Formel IV in Betracht: 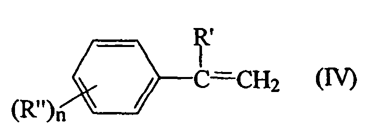 in der R' und R" unabhängig voneinander für H oder C₁- bis C₈-Alkyl und n für 0, 1, 2 oder 3 stehen.

Demgemäß werden in dem erfindungsgemäßen Verfahren vorzugsweise ethylenisch ungesättigte Monomere ausgewählt aus
- Styrolverbindungen der allgemeinen Formel IV,
- Acrylsäure oder Methacrylsäure oder deren C₁- bis C₂₀-Alkylestern
- Dienen mit konjugierten Doppelbindungen,
- ethylenisch ungesättigten Dicarbonsäuren und deren Derivate, und
- ethylenisch ungesättigten Nitrilverbindungen eingesetzt.

Besonders bevorzugt werden in dem erfindungsgemäßen Verfahren die Monomere Styrol, α-Methylstyrol, Divinylbenzol, Vinyltoluol, C₁- bis C₈-Alkyl(meth)-acrylate, insbesondere n-Butylacrylat, 2-Ethylhexylacrylat oder Methylmethacrylat und Butadien, außerdem Acrylnitril sowie Monomerengemische, die zu wenigstens 85 Gew.% aus den vorgenannten Monomeren oder Gemischen der vorgenannten Monomere zusammengesetzt sind, ganz besonders bevorzugt Styrol und Methylmethacrylat, eingesetzt.

Weiterhin kann man bei der Herstellung von Polymerisaten beispielsweise vemetzende Monomere mitverwenden. Vernetzende Monomere sind bi- oder polyfunktionelle Comonomere mit mindestens 2 olefinischen Doppelbindungen, beispielsweise Butadien und Isopren, Divinylester von Dicarbonsäuren wie Bernsteinsäure und Adipinsäure, Diallyl- und Divinylether, bifunktionelle Alkohole wie Ethylenglykol und Butan-1,4-diol, die Ester der Acrylsäure und Methacrylsäure mit den genannten bifunktionellen Alkoholen, 1,4-Divinylbenzol und Triallylcyanurat. Besonders bevorzugt sind der Acrylsäureester des Tricyclodecenylalkohols, der unter dem Namen Dihydrodicyclopentadienylacrylat bekannt ist, sowie die Allylester der Acrylsäure und der Methacrylsäure.

Des weiteren könne Zusatzstoffe zugefügt werden, die den Polymerisaten bestimmte Eigenschaften verleihen. Beispielhaft seien als solche Zusatzstoffe Polymere, Farbstoffe und Pigmente und ferromagnetische Pigmente genannt.

Der Anteil der Zusatzstoffe beträgt in der Regel mindestens 0,1 Gew.%, bevorzugt mindestens 0,5 Gew.%, bezogen auf die Gesamtmasse der Mischung.

Die vorliegende Erfindung betrifft daher auch die Verwendung einer Substanz der allgemeinen Formel (I) oder (Ia) zur Beimischung in Beschichtungsmittelzusammensetzungen.

Die Erfindung betrifft außerdem ein Verfahren zur Herstellung mindestens einer Beschichtung auf mindestens einer Substratoberfläche, wobei eine Beschichtungsmittelzusammensetzung verwendet wird, die eine Verbindung der allgemeinen Formel (I) oder der allgemeinen Formel (Ia) enthält. Bei dem erfindungsgemäßen Verfahren wird eine erfingungsgemäße Beschichtungsmittelzusammensetzung mit der Substratoberfläche in Kontakt gebracht.

Die erfindungsgemäßen Beschichtungsmittel können entsprechend ihrem Einsatzgebiet geeignete Zusatzstoffe enthalten, wie Polymere, insbesondere Vernetzer, Katalysatoren für die Vernetzung, insbesondere Pigmente oder lackübliche Hilfmittel, Farbstoffe, Füllstoffe, Verstärkerfüllstoffe, Rheologiehilfsmittel, Netz- und Dispergiermittel, Entschäumer, Haftvermittler, Additive zur Verbesserung der Oberflächenglätte, Mattierungsmittel, Verlaufmittel, Filmbildehilfsmittel, Trokkenstoffe, Hautverhinderungsmittel, Lichtschutzmittel, Korrosionsinhibitoren, Biozide, Flammschutzmittel, Polymerisationsinhibitoren, insbesondere Photoinhibitoren oder Weichmacher, wie sie beispielsweise auf dem Kunststoff- oder Lacksektor üblich und bekannt sind. Die Auswahl der Zusatzstoffe richtet sich nach dem gewünschten Eigenschaftsprofil des Beschichtungsmittels und dessen Verwendungszweck.

Bevorzugt werden die erfindungsgemäßen Beschichtungsmittelzusammensetzungen als oder in einem Bindemittel für flüssige Lacksysteme oder Lackdispersionen verwendet.

Die erfindungsgemäßen Beschichtungsmittelzusammensetzungen können mit den bekannten Methoden der Applikation flüssiger Phasen wie Tauchen, Spritzen, Rakeln, Streichen, Aufwalzen (Roller Coating) oder Gießen in Form eines flüssigen Vorhangs aufgetragen werden. Beispiele geeigneter Unterlagen sind Filme, Folien, Fasern, Bleche, Gewebe oder Formteile, insbesondere Automobilkarosseriebauteile, aus Metall, Glas, Holz, Papier, Kunststoff, Leder, mineralische Untergründe oder Verbundmaterialien hieraus. Diese Unterlagen können beim Auftrag statisch ruhen oder bewegt wrden wie etwa beim Coil-Coating-Verfahren.

Weiterhin können die erfindungsgemäßen Beschichtungsmittelzusammensetzungen in Pulverform, insbesondere bei der Pulverlackierung, zur Anwendung kommen.

Insbesondere können die erfindungsgemäßen Beschichtungsmittelzusammensetzungen Bestandteile von mehrschichtigen Lackaufbauten sein, wie sie beispielsweise bei der Automobil-Serienlackierung, der Automobil-Reparaturlackierung, der Kunststofflackierung, der Industrielackierung, dem Container Coating, dem Coil Coating-Verfahren oder der Möbellackierung anzutreffen sind.

Im folgenden soll die vorliegende Erfindung nunmehr anhand einiger Beispiele erläutert werden.

### BEISPIELE

Für alle geschilderten Versuche wurde als Lack ein Urethanacrylat, aufgebaut aus dem Isocyanurat von Hexamethylendiisocyanat, umgesetzt mit Hydroxyethylacrylat, verwendet. Als Radikaladdukt wurde in allen Fällen 1-Phenyl-1-(2',2',6',6'-tetramethyl-1'-piperidinyloxy)-ethan verwendet.

### Lagerstabilität:

Um den positiven Effekt der Addukte hinsichtlich der Lagerstabilität zu zeigen, wurde das Urethanacrylat einmal mit 3Gew.-% Benzoylperoxid, einem gängigen thermischen Initiator in der Polymerchemie, und einmal mit 3 Gew.-% Addukt vermischt und bei 130°C aufbewahrt. Das Ergebnis zeigt Tabelle 1.

**Tabelle 1**

| | nach 1 h | nach 24 h |
|---|---|---|
| Lackformulierung mit Addukt | flüssig | flüssig |
| Lackforinulierung mit Benzoylperoxid | fest | fest |

### Einfluß der zugesetzten Säure:

Das Urethanacrylat wurde einmal mit Radikaladdukt (Lackformulierung 1) und einmal mit Radikaladdukt und p-Toluolsulfonsäure (Lackformulierung 2) gemischt. Die Lackformulierungen wurden anschließend 10 Minuten auf 150°C erhitzt. Zur Messung des Härtungsprozesses wurde von den gehärteten Lacken die Pendelhärte nach DIN 53157 bestimmt. Die Ergebnisse zeigt Tabelle 2.

**Tabelle 2**

| Gew.-% Addukt bzw Addukt/Säure | Pendelhärte Lack 1 | Pendelhärte Lack 2 |
|---|---|---|
| 5 | 6 | 59 |
| 2,5 | 14 | 89 |
| 1,7 | 61 | 106 |

## Patentansprüche

1. Beschichtungsmittelzusammensetzung umfassend mindestens eine Verbindung der allgemeinen Formel (I): 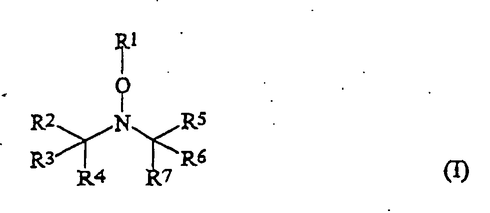 in der
- R¹ einen Rest mit mindestens einem Kohlenstoffatom repräsentiert und das zu R¹ korrespondierende freie Radikal R¹• eine radikalische Polymerisation ungesättigter Monomere initiieren kann,
- die Reste R², R³, R⁴, R⁵, R⁶, R⁷ für gleiche oder verschiedene gerad- oder verzweigtkettige, substituierte oder unsubstituierte Alkylgruppen, substituierte oder unsubstituierte Aralkyl-, Alkylaryl- oder Arylgruppen stehen, wobei -CR²R³ oder -CR⁶R⁷ Teil einer cyclischen Struktur sein können,
- die Reste R⁴ und R⁵ für Cyano-, Ether-, Hydroxy-, Nitro- oder Carbonylhaltige Gruppen stehen oder R⁴CNCR⁵ ein Teil einer substituierten oder unsubstituierten cyclischen Struktur, an die mindestens ein weiterer gesättigter oder ungesättigter Ring ankondensiert sein kann, ist oder -CR²R³R⁴ oder -CR⁵R⁶R⁷ Teil eines aromatischen Rings sind;
oder mindestens eine Verbindung der allgemeinen Formel (Ia): 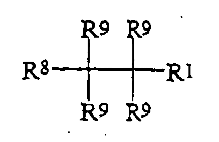 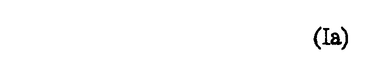 in der
- R¹ einen Rest mit mindestens einem Kohlenstoffatom repräsentiert und das zu R¹ korrespondierende freie Radikal R¹• eine radikalische Polymerisation ungesättigter Monomere initiieren kann,
- R⁸ und R⁹ für Wasserstoff, gleiche oder verschiedene gerad- oder verzweigtkettige, substituierte oder unsubstituierte Alkylgruppen, substituierte oder unsubstituierte Aralkyl-, Alkylaryl- oder Arylgruppen stehen, die einen polymeren Charakter besitzen können,
- mindestens zwei der Reste R⁹ ein Phenylrest oder ein substituierten Phenylrest sind;
oder ein Gemisch aus zwei oder mehr davon
und
p-Toluolsulfonsäure.

2. Beschichtungsmittelzusammensetzung nach Anspruch 1, **dadurch gekennzeichnet, dass** die Verbindung der allgemeinen Formel (Ia) Diphenylethaneinheiten enthält.

3. Beschichtungsmittelzusammensetzung nach Anspruch 1 oder 2, **dadurch gekennzeichnet, dass** 2,2,6,6-Tetramethyl-1-piperidinyloxy (TEMPO), 4-Hydroxy-2,2,6,6-tetramethyl-1-piperidinyloxy (HO-TEMPO) oder di-tert.-Butyl-nitroxid (DTBN) als stabile N-Oxyl-Radikale im Initiatoraddukt der allgemeinen Formel (I) vorliegen.

4. Beschichtungsmittelzusammensetzung nach einem der vorherigen Ansprüche, **dadurch gekennzeichnet, dass** sie ethylenisch ungesättigte Monomere enthält.

5. Beschichtungsmittelausammensetzung nach Anspruch 4, **dadurch gekennzeichnet, dass** das ethylenisch ungesättigte Monomer ausgewählt ist aus der Gruppe bestehend aus:
- Styrolverbindungen der allgemeinen Formel (IV) 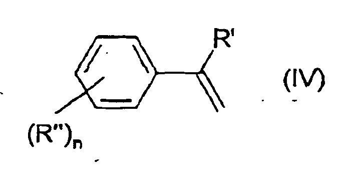 in der R' und R" unabhängig voneinander für H oder C₁-C₈-Alkyl und n für 0, 1, 2 oder 3 steht;
- Acrylsäure oder Methacrylsäure oder deren C₁-C₂₀-Alkylester;
- Dienen mit konjugierten Doppelbindungen;
- ethylenisch ungesättigten Dicarbonsäuren und deren Derivaten;
- und ethylenisch ungesättigten Nitrilverbindungen.

6. Beschichtungsmittelzusammensetzung nach einem der Ansprüche 1 bis 5, **dadurch gekennzeichnet, dass** als Initiator-Addukt der Formel (I) 1-Phenyl-1-(2',2',6',6'-tetramethyl-1'-piperidinyloxy)-ethan eingesetzt wird.

7. Verfahren zur Herstellung mindestens einer Beschichtung auf mindestens einer Substratoberfläche **dadurch gekennzeichnet, dass** eine Beschichtungsmittelzusammensetzung nach einem der vorherigen Ansprüche mit der Substratoberfläche in Kontakt gebracht wird.

8. Verwendung einer Beschichtungsmittelzusammensetzung nach einem der Ansprüche 1 bis 6 als oder in einem Bindemittel für flüssige Lacksysteme oder Lackdispersionen.

9. Verwendung einer Beschichtungsmittelzusammensetzung nach Anspruch 8, **dadurch gekennzeichnet, dass** zusätzliche Pigmente oder lackübliche Hilfsmittel enthalten sind.

10. Verwendung einer Substanz der allgemeinen Formel (I) oder (Ia) gemäß Anspruch 1, wobei R¹• eine allgemeine Struktur der Formel (II) aufweist 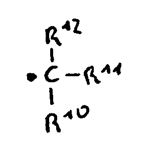 wobei R¹⁰, R¹¹ und R¹² gleiche oder unterschiedliche Gruppen ausgewählt aus Wasserstoff, Alkyl, Phenyl, Cyano, Carboxyl, Cyclischen Gruppen und substituierten Gruppen davon sind zur Beimischung in Beschichtungsmittelzusammensetzungen.

## Claims

1. A coating material composition comprising at least one compound of the formula (I) 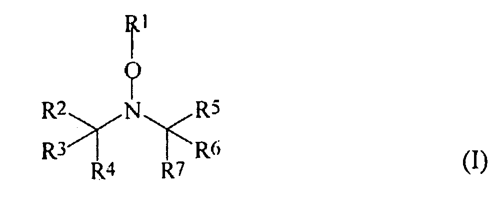 in which
- R¹ is a radical with at least one carbon atom, and the free radical R¹• corresponding to R¹ is able to initiate a free-radical polymerization of unsaturated monomers,
- the radicals R², R³, R⁴, R⁵, R⁶, and R⁷ are identical or different straight- or branched-chain, substituted or unsubstituted alkyl groups, substituted or unsubstituted aralkyl, alkylaryl or aryl groups, and -CR²R³ or -CR⁶R⁷ may be part of a cyclic structure,
- the radicals R⁴ and R⁵ are cyano-, ether-, hydroxyl-, nitro- or carbonyl-containing groups or R⁴CNCR⁵ is part of a substituted or unsubstituted cyclic structure to which at least one further saturated or unsaturated ring may be fuzed, or
- -CR²R³R⁴ or -CR⁵R⁶R⁷ is part of an aromatic ring;
or at least one compound of the formula (Ia) 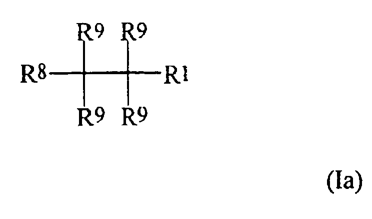 in which
- R¹ is a radical with at least one carbon atom, and the free radical R¹• corresponding to R¹ is able to initiate a free-radical polymerization of unsaturated monomers,
- R⁸ and R⁹ are hydrogen, identical or different straight- or branched-chain, substituted or unsubstituted alkyl groups, substituted or unsubstituted aralkyl, alkylaryl or aryl groups, which may possess a polymeric character,
- at least two of the radicals R⁹ are a phenyl radical or a substituted phenyl radical;
or a mixture of two or more thereof
and p-toluenesulfonic acid.

2. The coating material composition according to claim 1, wherein the compound of the formula (Ia) comprises diphenylethane units.

3. The coating material composition according to claim 1 or 2, wherein 2,2,6,6-tetramethyl-1-piperidinyloxy (TEMPO), 4-hydroxy-2,2,6,6-tetramethyl-1-piperidinyloxy (HO-TEMPO) or di-tert-butyl nitroxide (DTBN) are present as stable N-oxyl radicals in the initiator adduct of the formula (I).

4. The coating material composition according to any of the preceding claims, comprising ethylenically unsaturated monomers.

5. The coating material composition according to claim 4, wherein the ethylenically unsaturated monomer is selected from the group consisting of:
- styrene compounds of the formula (IV) 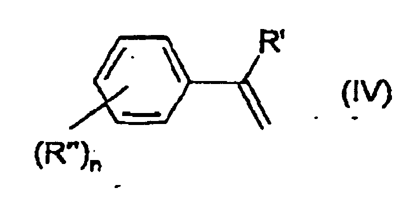
in which R' and R" independently of one another are H or C₁-C₈ alkyl and n is 0, 1, 2 or 3;
- acrylic acid or methacrylic acid or their C₁-C₂₀ alkyl esters;
- dienes containing conjugated double bonds;
- ethylenically unsaturated dicarboxylic acids and their derivatives;
- and ethylenically unsaturated nitrile compounds.

6. The coating material composition according to any of claims 1 to 5, wherein 1-phenyl-1-(2',2',6',6'-tetramethyl-1'-piperidinyloxy)ethane is used as initiator adduct of the formula (I).

7. A process for producing at least one coating on at least one substrate surface, which comprises contacting the substrate surface with a coating material composition according to any of the preceding claims.

8. The use of a coating material composition according to any of claims 1 to 6 as or in a binder for liquid coating systems or coating dispersions.

9. The use of a coating composition according to claim 8, wherein additional pigments or customary coatings auxiliaries are comprised.

10. The use of a substance of the formula (I) or (Ia) according to claim 1, where R¹. possesses a general structure of the formula (II) 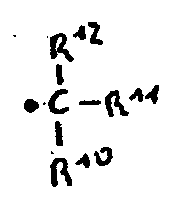 where R¹⁰, R¹¹ and R¹² are the same or are different groups selected from hydrogen, alkyl, phenyl, cyano, carboxyl or cyclic groups and substituted groups thereof for addition to coating material compositions.

## Revendications

1. Composition de revêtement comprenant au moins un composé de formule générale (I) : 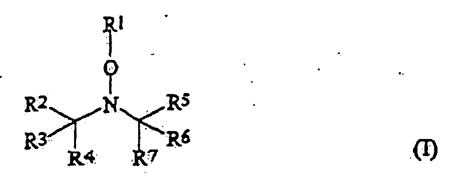 dans laquelle
- R¹ représente un radical avec au moins un atome de carbone et le radical libre correspondant à R¹, R¹·, peut initier une polymérisation radicalaire de monomères insaturés,
- les radicaux R², R³, R⁴, R⁵, R⁶, R⁷ sont des groupements alkyle identiques ou différents, linéaires
ou ramifiés, substitués ou non, des groupements substitués ou non de types aralkyle, alkylaryle ou aryle, -CR²R³ ou -CR⁶R⁷ pouvant faire partie d'une structure cyclique,
- les radicaux R⁴ et R⁵ représentent des groupements contenant des groupements cyano, éther, hydroxy, nitro ou carbonyle ou R⁴CNCR⁵ fait partie d'une structure cyclique substituée ou non, sur laquelle au moins un autre cycle saturé ou insaturé peut être condensé, ou
- -CR²R³R⁴ ou -CR⁵R⁶R⁷ font partie d'un cycle aromatique;
ou au moins un composé de formule générale (Ia) : 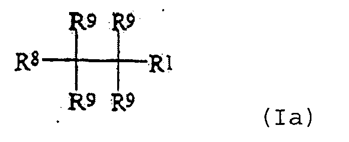 dans laquelle
- R¹ représente un radical avec au moins un atome de carbone et le radical libre correspondant à R¹, R¹·, peut initier une polymérisation radicalaire de monomères insaturés,
- R⁸ et R⁹ représentent de l'hydrogène, des groupements alkyle identiques ou différents, linéaires
ou ramifiés, substitués ou non, des groupements aralkyle, alkylaryle ou aryle substitués ou non, qui peuvent avoir un caractère polymère,
- au moins deux des radicaux R⁹ sont un radical phényle ou un radical phényle substitué;
ou un mélange de deux ou plusieurs d'entre eux
et
de l'acide p-toluènesulfonique.

2. Composition de revêtement selon la revendication 1, **caractérisée en ce que** le composé de formule générale (Ia) contient des unités diphényléthane.

3. Composition de revêtement selon la revendication 1 ou 2, **caractérisée en ce que** le 2,2,6,6-tétraméthyl-1-pipéridinyloxy (TEMPO), le 4-hydroxy-2,2,6,6-tétraméthyl-1-pipéridinyloxy (HO-TEMPO) ou le di-tert-butyl-nitroxyde (DTBN) se présentent sous la forme de radicaux N-oxyle stables dans le produit d'addition initiateur de formule générale (I).

4. Composition de revêtement selon l'une quelconque des revendications précédentes, **caractérisée en ce qu'**elle contient des monomères à insaturation éthylénique.

5. Composition de revêtement selon la revendication 4, **caractérisée en ce que** le monomère à insaturation éthylénique est choisi dans le groupe constitué des suivants :
- des composés de styrène de formule générale (IV) : 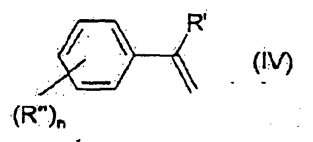 dans laquelle R' et R" représentent, indépendamment l'un de l'autre, H ou un alkyle en C₁-C₈ et n vaut 0, 1, 2 ou 3;
- de l'acide acrylique ou de l'acide méthacrylique ou leurs esters d'alkyle en C₁-C₂₀;
- des diènes pourvus de doubles liaisons conjuguées;
- des acides dicarboxyliques à insaturation éthylénique ou leurs dérivés; et
- des composés de nitrile à insaturation éthylénique.

6. Composition de revêtement selon l'une quelconque des revendications 1 à 5, **caractérisée en ce que** l'on utilise comme produit d'addition initiateur de formule (I) le 1-phényl-1-(2',2',6',6'-tétraméthyl-1'-pipéridinyloxy)-éthane.

7. Procédé pour fabriquer au moins un revêtement sur au moins une surface de substrat, **caractérisé en ce que** l'on met une composition de revêtement selon l'une quelconque des revendications précédentes en contact avec la surface du substrat.

8. Utilisation d'une composition de revêtement selon l'une quelconque des revendications 1 à 6 comme ou liant dans un liant destiné aux systèmes de vernis ou dispersions de vernis liquides.

9. Utilisation d'une composition de revêtement selon la revendication 8, **caractérisée en ce qu'**elle peut contenir des pigments supplémentaires ou des adjuvants usuels dans les vernis.

10. Utilisation d'une substance de formule générale (I) ou (Ia) selon la revendication 1, dans laquelle R¹. présente une structure générale de formule (II) : 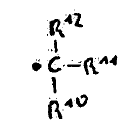 où R¹⁰, R¹¹ et R¹² sont des groupements identiques ou différents choisis parmi l'hydrogène, des groupements alkyle, phényle, cyano, carboxyle, des groupements cycliques et leurs groupements substitués pour mélange dans des compositions d'agents de revêtement.
